# EUROPÄISCHE PATENTSCHRIFT

(11) **EP 2 101 189 B1**
(45) Veröffentlichungstag und Bekanntmachung des Hinweises auf die Patenterteilung: **15.12.2010**
(21) Anmeldenummer: 08004812.7
(22) Anmeldetag: 14.03.2008
(51) Int. Cl.: G01S 7/481, G01S 17/02

(54) **Optischer Sensor**
Optical sensor
Capteur optique

(43) Veröffentlichungstag der Anmeldung: 16.09.2009
(73) Patentinhaber: Firma Pepperl + Fuchs GmbH, 68307 Mannheim (DE)
(72) Erfinder: Klar, Ulrich, 12159 Berlin (DE)
(74) Vertreter: Schiffer, Axel Martin

(56) Entgegenhaltungen:
- EP-A- 0 527 326
- EP-A- 0 718 974
- DE-A1- 10 356 704
- DE-U1-202006 004 240
- US-A1- 2003 053 041

## Beschreibung

Die vorliegende Erfindung bezieht sich auf einen optischen Sensor zum Nachweis von Objekten in einem Erfassungsbereich nach dem Oberbegriff des Anspruchs 1.

Ein gattungsgemäßer Sensor ist beispielsweise in EP 0 924 535 A2 beschrieben und weist folgende Komponenten auf: eine Sendeeinheit zum Aussenden von Licht in den Erfassungsbereich, eine Empfangseinheit zum Nachweis von von einem nachzuweisenden Objekt reflektierten und/oder gestreuten Licht und eine Empfangsoptik zum Leiten von von dem nachzuweisenden Objekt reflektiertem und/oder gestreutem Licht auf die Empfangseinheit. Die Empfangsoptik weist dabei optische Mittel auf zum Leiten von Licht sowohl von Objekten in einem Fernbereich als auch von Objekten in einem Nahbereich vor der Empfangsoptik. Schließlich ist eine Steuer- und Auswerteeinheit zum Ansteuern der Sendeeinheit und der Empfangseinheit, zum Auswerten eines von der Empfangseinheit nachgewiesenen Signals und zum Ausgeben eines Schaltsignals vorhanden.

Solche Sensoren werden beispielsweise zum Nachweis von diffus zurückstrahlenden Objekten verwendet. Wenn ein im Erfassungsbereich befindliches Objekt einen Teil des Sendelichts in Richtung der Empfangsoptik zurückstrahlt, wird dieses reflektierte oder abgestrahlte Licht zu einem Empfangselement gelenkt und generiert dort ein Nachweissignal.

Ein Nachteil bekannter Sensoren dieser Art war bisher die räumliche Begrenzung des Überwachungsbereichs. Gemäß den Abbildungseigenschaften der Empfangsoptik werden Objekte nur in einem eingeschränkten Bereich der Sendeachse erkannt.

Um den Überwachungsbereich in Richtung der Empfangsoptik zu erweitern, schlägt EP 0 924 535 A2 vor, eine Multifokuslinse zu verwenden, welche für unterschiedliche

Bereiche des Nachweisbereichs unterschiedliche Brennpunkte aufweist. Die dort beschriebene Multifokuslinse ist darüber hinaus asymmetrisch und der für die Abbildung eines Überwachungs-Nahbereichs auf das Empfangselement wirksame Teil der Multifokuslinse liegt näher bei der Sendeachse als der Bereich, welcher für die Abbildung eines Fernbereichs wirksam ist.

Die erreichbaren numerischen Aperturen lassen bei der in EP 0 924 535 A2 beschriebenen Anordnung zu wünschen übrig.

Einen weiteren gattungsgemäßen Sensor beschreibt beispielsweise US 2003/0053041 A1, wobei folgende Komponenten vorhanden sind: eine Lichtquelle zum Aussenden von Licht in den Erfassungsbereich, optische Elemente zum Abrastern des Erfassungsbereichs mit dem ausgesandten Licht und eine Empfangsoptik mit einem parabolförmigen Spiegel zum Leiten des an einem nachzuweisenden Objekt reflektierten und/oder gestreuten Lichts auf die Empfangseinheit.

DE 20 2006 004 240 U1 beschreibt einen Entfernungsmesser, beinhaltend: eine Lichtquelle zum Emittieren eines Messstrahls in Richtung des Messobjekts, Linsen zum Kullimieren des emitierten Messstrahls und zum Empfangen und Abbilden eines reflektierten Messstrahls, einen Schaltkreis zum Frequenz-Modulieren der Lichtquelle und eine Rechnereinheit zum Berechnen der Entfernung. Zur besseren Erfassung von Objekten im Nahbereich wird eine zusätzliche Linse zylinderförmiger Oberfläche verwendet.

In EP 0 527 326 A1 wird ein Reflektionslichttaster beschrieben mit einer Lichtquelle zum Aussenden von Messlicht in den Erfassungsbereich, mit einer Empfangsoptik zum Abbilden des an einem nachzuweisenden Objekt reflektierten Lichts und mit mindestens einem Lichtempfangselement für den Nahbereich und einem für den Fernbereich. Um den zur Detektion eines nachzuweisenden Objekts notwendigen Mindestabstand zu reduzieren, wird zwischen der Empfangsoptik und dem Nahbereichsensor ein zusätzliches Element mit spiegelnder Oberfläche verwendet.

EP 0 718 974 A1 beschreibt einen Näherungsschalter zum Nachweis von Objekten in einem Überwachungsbereich. Um bei kompakter Baugröße eine hohe Empfindlichkeit zu erreichen, wird ein einziger zweigeteilter Hohlspiegel verwendet. Hierbei wird jeweils eine Spiegelhälfte zur Ablenkung des abgestrahlten Lichts einer Lichtquelle, bzw. zur Bündelung des an einem zu messenden Objekts zurückreflektierten Lichts auf den Lichtfühler genutzt.

In DE 103 56 704 A1 wird ein Reflektionslichttaster zum Erkennen eines Objekts in einem Überwachungsbereich beschrieben. Der Lichttaster umfasst eine Sendeeinheit zum Entsenden von Licht in den Überwachungsbereich, ein optisches System zum Abbilden des am zu untersuchenden Objekts reflektierten oder gestreuten Lichts und einen in verschiedene Zonen unterteilten Lichtempfänger zum Detektieren des vom optischen System abgebildeten Lichts. Damit der zur Detektion eines Objekts notwendige Abstand verringert werden kann, wird zwischen dem Lichtempfänger und dem optischen System ein zusätzliches lichtleitendes Element verwendet.

Als eine **Aufgabe** der Erfindung kann demgemäß angesehen werden, einen optischen Sensor zu schaffen, bei dem eine verbesserte Empfindlichkeit für den Nahbereich und außerdem eine vergrößerte Apertur der Empfangsoptik erzielt wird.

Diese Aufgabe wird durch den optischen Sensor mit den Merkmalen des Anspruchs 1 gelöst.

Bevorzugte Ausgestaltungen des erfindungsgemäßen optischen Sensors sind Gegenstand der abhängigen Ansprüche und außerdem in der folgenden Beschreibung, insbesondere im Zusammenhang mit den Figuren, beschrieben.

Der optische Sensor der oben genannten Art ist erfindungsgemäß dadurch weitergebildet, dass die Empfangsoptik zum Leiten von Licht von Objekten im Fernbereich einen Hohlspiegel aufweist, dass die Empfangseinheit mindestens einen Detektor aufweist, der in einem Fokalbereich des Hohlspiegels positioniert ist, und dass mindestens ein gesondertes Reflektorelement vorhanden ist, welches zum Leiten des Lichts von Objekten im Nahbereich auf mindestens einen der Detektoren eingerichtet und positioniert ist.

Als ein Kerngedanke der Erfindung kann angesehen werden, anstelle von Linsen für die Empfangsoptik als wesentliche Funktionskomponente einen Hohlspiegel vorzusehen und entsprechend den Detektor oder die Detektoren in einem Fokalbereich dieses Hohlspiegels anzuordnen. Im Hinblick auf den Fernbereich wird mit einem Hohlspiegel im Wesentlichen dieselbe Funktionalität wie bei einer Linse erzielt. Bezüglich des Nahbereichs können jedoch im Zusammenwirken mit den weiteren Merkmalen des Anspruchs 1 deutliche Verbesserungen erreicht werden.

Als weiterer Kerngedanke kann erachtet werden, gesonderte Reflektorelemente vorzusehen, die zum Leiten des Lichts von Objekten im Nahbereich auf mindestens einen der Detektoren eingerichtet und positioniert sind. Grundsätzlich kann bereits ein einziges gesondertes Reflektorelement für die Realisierung der Erfindung ausreichen.

Mit einfachen Mitteln kann so eine deutlich verbesserte Empfindlichkeit für den Nahbereich und ein im Vergleich zu Linsenoptiken vergrößerter Öffnungswinkel des Empfangsbereichs erzielt werden.

Als Lichtquellen für die Sendeeinheit kommen grundsätzlich bekannte Lichtsender in Betracht. Besonders bevorzugt werden Leuchtdioden oder Laserdioden, insbesondere im Rot- und Infrarot-Bereich verwendet.

Als Detektoren werden typischerweise Halbleiterdetektoren eingesetzt.

Bei dem Hohlspiegel kann es sich für einfache Ausführungsvarianten des erfindungsgemäßen Sensors um einen sphärischen Hohlspiegel handeln. Besonders bevorzugt werden aber Hohlspiegel eingesetzt, die wenigstens bereichsweise die Form eines Paraboloids aufweisen. Sphärische Aberrationen treten bei Parabolspiegeln nicht auf und das Licht aus dem Fernbereich kann deshalb effektiver gesammelt werden.

Unter dem Begriff Steuer- und Auswerteeinheit sollen für die vorliegende Beschreibung im Wesentlichen alle intelligenten elektronischen Komponenten des Sensors verstanden werden. Grundsätzlich kann die Steuer- und Auswerteeinheit auch aus einer Mehrzahl von Mikrocontrollern, FPGAs, CPLDs, GALs oder anderen programmierbaren Logik-Komponenten und gegebenenfalls zugeordneten Speicherbausteinen, aufgebaut sein, durch welche beispielsweise unterschiedliche Funktionalitäten realisiert werden.

Grundsätzlich können die separaten Reflektorelemente, die auch als Nahbereichselemente bezeichnet werden, überall dort angeordnet und positioniert werden, von wo aus sie von Objekten im Nahbereich reflektiertes und/oder gestreutes Licht auf die Empfangseinheit leiten können. Prinzipiell können die Reflektorelemente demgemäß auch außerhalb oder mehr oder weniger beliebig weit von dem Hohlspiegel angeordnet und positioniert sein.

Im Grundsatz ist es auch möglich, dass das vom Objekt kommende Licht erst nach mehreren Reflektionen auf den Detektor trifft, dass also mehrere Reflektorelemente zusammenwirken.

Bei einer bevorzugten Ausgestaltung des erfindungsgemäßen Sensors, die sich durch einen kompakten Aufbau auszeichnet, ist mindestens eines der Reflektorelemente an einer Innenseite des Hohlspiegels angeordnet. Insbesondere sind bevorzugt alle Reflektorelemente am Hohlspiegel innen geeignet positioniert und ausgerichtet.

Das maßgebliche Kriterium im Hinblick auf die Anordnung und Positionierung der Reflektorelemente ist, dass für einen möglichst großen Entfernungsbereich jeweils ein möglichst gleichbleibend großer Anteil des vom Objekt kommenden Lichts für den Nachweisvorgang nutzbar gemacht wird.

Bei einer einfach aufgebauten und deshalb kostengünstigen Variante sind die Reflektorelemente separate im Hohlspiegel angeordnete Komponenten.

Beispielsweise kann als Reflektorelement ein ringsegmentförmiges Element vorhanden sein, welches im Hinblick auf die oben genannten Kriterien geeignet positioniert und ausgerichtet wird.

Besonders gut kann die von dem Objekt kommende Strahlung ausgenutzt werden, wenn ein als Konturkörper ausgebildetes Reflektorelement vorhanden ist. Beispielsweise kann genau ein solcher Konturkörper vorhanden sein. Die Form und Position solcher Konturkörper wird dann zweckmäßig mit einer Simulationssoftware errechnet und optimiert. Beispielsweise kann es sich bei einem solchen Konturkörper um ein präzise gefertigtes Spritzgussteil handeln.

Noch bessere Resultate können im Hinblick auf die bestmögliche Ausnutzung des von den Objekten kommenden Lichts erreicht werden, wenn der Hohlspiegel mit mindestens einem der Reflektorelemente einstückig gefertigt ist. Ein solcher Hohlspiegel kann dann beispielsweise eine hochspezifische und individuell für den jeweiligen Sensor errechnete Konturfläche aufweisen.

Ein weiteres kriterium, welches bei der Gestaltung der Spiegelkontur berücksichtigt werden kann, ist, dass die Spiegelkontur so gewählt wird, dass die Nachweisintensität zumindest im Nahbereich möglichst weitgehend unabhängig von der Entfernung ist.

Damit die Sendeeinheit nur einen möglichst geringen Teilbereich des Hohlspiegels abschattet, wird die Sendeeinheit bevorzugt in einem achsfernen Bereich des Hohlspiegels angeordnet. Beispielsweise kann die Sendeeinheit in einem Randbereich des Hohlspiegels positioniert werden. Da der Nahbereich im Wesentlichen der Raumbereich unmittelbar vor der Sendeeinheit ist, ist es außerdem vorteilhaft, wenn die Reflektorelemente in einer Umgebung der Sendeeinheit positioniert sind.

Die Erfindung kann grundsätzlich für alle optischen Sensoren eingesetzt werden, bei denen es auf eine gute Ausnutzung des von nachzuweisenden Objekten kommenden Lichts und einen außerdem auf einen möglichst großen Nachweisbereich ankommt. Beispielsweise kann der erfindungsgemäße optische Sensor als Lichttaster ausgebildet sein.

Besonders vorteilhaft kann die Erfindung darüber hinaus bei optischen Entfernungsmessern nach dem Laufzeitprinzip eingesetzt werden.

Weitere Vorteile und Merkmale der vorliegenden Erfindung werden nachstehend mit Bezug auf die beigefügten Figuren erläutert.

Hierin zeigt:
- Fig. 1: in schematischer Ansicht den Nachweis von Objekten im Fernbereich;
- Fig. 2: in schematischer Ansicht eine optische Anordnung zur Illustration der Schwie- rigkeiten beim Nachweis von Objekten im Nahbereich;
- Fig. 3: in schematischer Ansicht einen erfindungsgemäßen optischen Sensor;
- Fig. 4: in schematischer Ansicht ein weiteres Beispiel eines erfindungsgemäßen opti- schen Sensors in Frontansicht vom Erfassungsbereich aus gesehen; und
- Fig. 5: ein Diagramm, in welchem die auf den Detektor auftreffende Leistung beim erfindungsgemäßen optischen Sensor sowie der Anordnung aus Fig. 2 doppelt- logarithmisch gegen die Entfernung des Objekts aufgetragen ist.

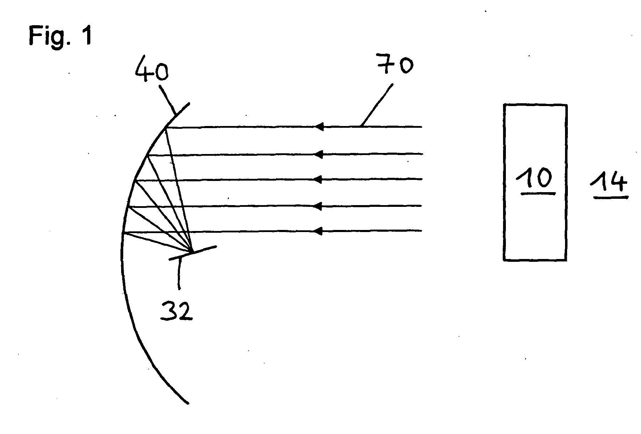

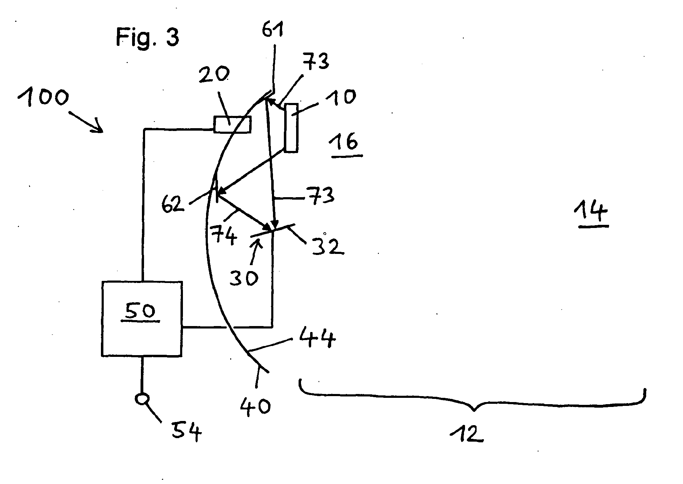

Ein Ausführungsbeispiel des erfindungsgemäßen optischen Sensors wird mit Bezug auf Figur 3 erläutert. Teile der Funktionalität des dort dargestellten optischen Sensors 100 werden außerdem mit Bezug auf die Figuren 1, 2 und 5 beschrieben. Der in Figur 3 schematisch dargestellte optische Sensor 100 weist als wesentliche Komponenten eine Sendeeinheit 20, eine Empfangseinheit 30, einen Hohlspiegel 40 und eine Steuer- und Auswerteeinheit 50 auf.

Die Sendeeinheit 20 wird von der Steuer- und Auswerteeinheit 50 angesteuert und weist eine hier nicht dargestellte Strahlungsquelle auf, welche Licht in einen Überwachungsbereich 12 aussendet. Bei der Lichtquelle 12 kann es sich beispielsweise um eine Infrarot-Laserdiode handeln.

Die Empfangseinheit 30 wird ebenfalls von der Steuer- und Auswerteeinheit 50 angesteuert und ein von der Empfangseinheit 30 geliefertes Signal wird in der Steuer- und Auswerteeinheit 50 ausgewertet. Die Empfangseinheit 30 weist einen hier schematisch dargestellten Detektor 32 auf, bei dem es sich typischerweise um einen Halbleiterdetektor handelt.

Der Empfangsbereich wird gedanklich unterteilt in einen Fernbereich 14, der ab etwa 1 m Abstand vom Sensor 100 beginnt und einen Nahbereich 16, der Abstände kleiner als 1 m umfasst. In Figur 3 befindet sich ein Objekt 10 im Nahbereich 16 vor der Sendeeinheit 20.

Auf einer Innenseite 44 des Hohlspiegels 40 sind separate Reflektorelemente 61, 62 positioniert, mit welchen erfindungsgemäß das vom Objekt 10 im Nahbereich 16 zurückgestrahlte Licht auf den Detektor 32 der Empfangseinheit 30 geleitet wird.

Diese Funktion wird mit Bezug auf die Figuren 1, 2 und 5 näher beschrieben. Äquivalente Komponenten sind in allen Figuren mit denselben Bezugszeichen versehen.

Zunächst wird die Situation für den Fernbereich 14 mit Bezug auf Figur 1 erläutert. Gezeigt sind dort der Hohlspiegel 40, das Empfangselement 32 und ein Objekt 10 im Fernbereich 14 des Empfangsbereichs. Der Hohlspiegel 40, der insbesondere eine Paraboloidform aufweisen kann, oder jedenfalls einen Ausschnitt dieses Hohlspiegels 40 bündelt das parallel einkommende Licht 70 auf den Detektor 32, der in einem Fokalbereich des Hohlspiegels 40 positioniert ist. Auf diese Weise kann mit einfachen Mitteln eine große Öffnung bei kleiner Bauform realisiert werden. Die hier nicht gezeigte Sendeeinheit 20 durchstößt den Hohlspiegel 40 an einer geeigneten Stelle im Randbereich, also an einem achsfernen Punkt. So wird möglichst wenig Strahlung durch die Sendeeinheit gegenüber dem Detektor 32 abgeschattet.

In dem in Figur 1 gezeigten Beispiel wird nur das in die obere Hälfte des Spiegels 40 einfallende Licht auf den Detektor 32 gebündelt. Die untere Hälfte des Hohlspiegels kann bei einer konkreten Bauform des Sensors demgemäß entfallen. In entsprechender Weise kann der Hohlspiegel 40 auch seitlich beschnitten werden, um ihn den gegebenen Platzverhältnissen im Sensor anzupassen. Man verliert hierdurch sehr wenig Nachweisintensität, da bei einem flachen Detektor 32 die seitlich auftreffenden Strahlen praktisch nicht mehr nachgewiesen werden.

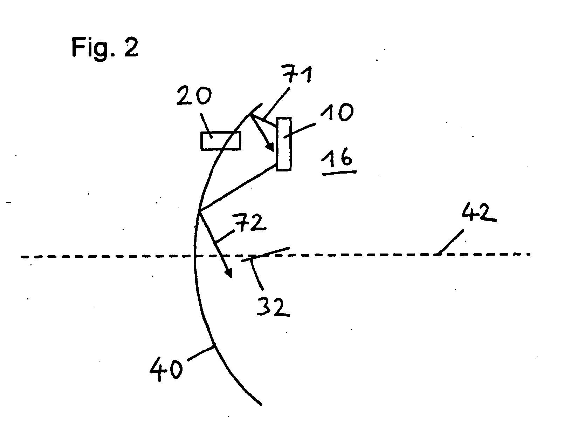

Wenn sich das Objekt 10 dem Hohlspiegel 40 annähert, geht die Parallelität der von dem Objekt 10 ausgehenden Strahlen nach und nach verloren. Die entsprechenden Strahlen werden von dem Hohlspiegel 40 dann nicht mehr auf den Detektor 32 geleitet und gehen demgemäß für den Objektnachweis verloren. Dies ist schematisch in Figur 2 dargestellt. Von dem dort gezeigten Objekt 10 ausgehende Strahlen 71, 72 verlaufen nicht parallel und insbesondere nicht parallel zur optischen Achse 42 des Hohlspiegels, auf welcher der Detektor 32 positioniert ist. Das durch die Strahlen 71, 72 repräsentierte Licht geht demgemäß für den Objektnachweis verloren. Durch diesen Effekt wird der Erfassungsbereich entweder nach unten beschränkt, so dass unterhalb eines bestimmten Mindestabstands keine Objekte mehr nachgewiesen werden können oder der optische Sensor wird in einem bestimmten Abstandbereich blind, dass heißt die Nachweisempfindlichkeit ist in diesem Bereich sehr klein. Hier schafft die vorliegende Erfindung Abhilfe, deren wesentlicher Gedanke darin besteht, bei dem Hohlspiegel 40, der auch als Empfängerspiegel bezeichnet wird, vorzugsweise um den Bereich der Sendeeinheit 20 herum die Krümmung so zu modifizieren, dass auch reflektierte Strahlung von Objekten im Nahbereich 16 auf den Detektor 32 gespiegelt wird. Ohne aufwändige zusätzliche Teile und Kosten kann auf diese Weise die Nahbereichsempfindlichkeit signifikant erhöht werden.

Diese gezielten Modifizierungen der Krümmung des Hohlspiegels 40 werden bei dem in Figur 3 gezeigten Ausführungsbeispiel durch die separaten Reflektorelemente 61, 62 realisiert. Diese Reflektorelement 61, 62 sind so an einer Innenseite 44 des Hohlspiegels positioniert und ausgerichtet, dass vom Objekt 10 zurückgestrahltes Licht, welches dort schematisch durch Pfeile 73, 74 dargestellt ist, ebenfalls auf den Detektor 32 geleitet wird. Prinzipiell kann auch ein Kreisringsegment, welches die Sendeeinheit 20 umschließt, als Reflektorelement eingesetzt werden.

Ein Schaltsignal kann an einem Ausgang 54 der Steuer- und Auswerteeinheit 50 ausgegeben werden.

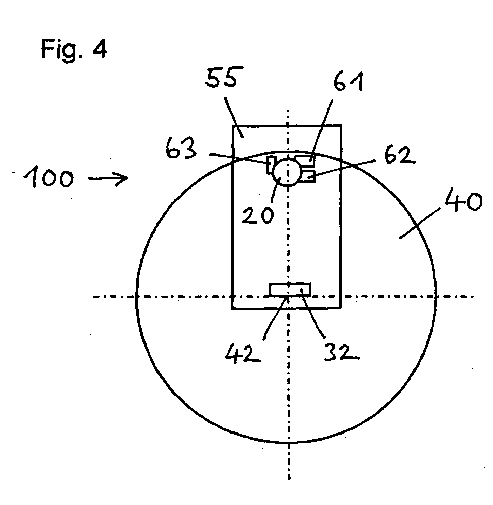

Figur 4 zeigt in schematischer Ansicht eine weitere Ausführungsform eines erfindungsgemäßen optischen Sensors 100 von vorn gesehen, also aus Sicht eines nachzuweisenden Objekts. Vor dem Hohlspiegel 40 ist dort ein schräg stehendes Fenster 55 positioniert, durch welches die effektiv ausgenutzte Öffnung des Hohlspiegels 40 definiert wird. In einer konkreten Bauform kann demgemäß der Rest des Hohlspiegels 40 weggelassen werden. Die Frontscheibe 55 ist gegenüber der optischen Achse 42 des Hohlspiegels 40 und somit auch gegen die zur optischen Achse 42 im Wesentlichen parallel verlaufende Strahlrichtung der Sendeeinheit 20 um wenige Grad verkippt. Reflexionen über den Hohlspiegel 40 und die Frontscheibe 55 auf den Detektor 32 können so vermieden werden.

In dem in Figur 4 gezeigten Beispiel sind in der Umgebung der Sendeeinheit 20 insgesamt drei Reflektorelemente 61, 62, 63 angeordnet, deren Form und Position gezielt so abgestimmt ist, dass die auf den Detektor 32 auftreffende Leistung zumindest in einem Abstandsbereich möglichst wenig mit dem Abstand des Objekts 10 vom erfindungsgemäßen Sensor 100 variiert.

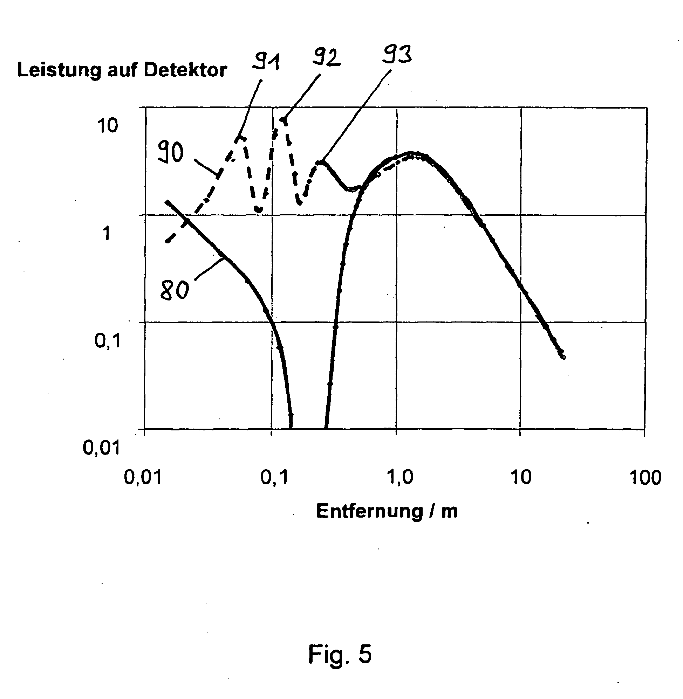

Die Wirkungen der erfindungsgemäß eingesetzten zusätzlichen separaten Reflektorelemente 61, 62, 63 gehen besonders anschaulich aus dem Diagramm in Figur 5 hervor. Aufgetragen ist dort in doppeltlogarithmischer Darstellung die auf den Detektor 32 auftreffende Leistung gegen die Entfernung des Objekts 10 vom optischen Sensor 100.

Für die in Figur 2 gezeigte Anordnung ohne die erfindungsgemäßen Reflektorelemente 61, 62, 63 ergibt sich experimentell der durch die Kurve 80 gekennzeichnete Verlauf. Hierbei ist deutlich der Abfall zwischen etwa 10 cm und 50 cm Objektabstand zu erkennen, wo die nachgewiesene Leistung um mehr als einen Faktor 100 abfällt. Grund für diesen Abfall ist der oben im Zusammenhang mit Figur 2 beschriebene Effekt, wonach bei sehr dicht vor der durch den Hohlspiegel 40 gebildeten Empfangsoptik befindlichen Objekten 10 das vom Objekt 10 ausgehende Strahlenbündel weitgehend nicht mehr parallel ist und demgemäß ohne die Reflektorelemente 61, 62, 63 nicht auf den Detektor 32 reflektiert wird. Der optische Sensor 100 ist an dieser Stelle praktisch blind.

Der Verlauf bei Einsatz der erfindungsgemäßen Reflektorelemente 61, 62, 63 ist durch die Kurve 90 gegeben. Zunächst ist hierzu festzustellen, dass für den Fernbereich ab etwa 1 m die Kurven 80 und 90 weitestgehend deckungsgleich sind. Dies ist verständlich, da für beide Situationen die parallel einfallenden Strahlenbündel jeweils von dem paraboloidförmigen Hohlspiegel auf den Detektor 32 fokussiert werden.

Deutliche Unterscheide liegen aber im Nahbereich 16 zwischen 1 m und 1 cm vor. Wesentlicher Befund ist hierbei, dass die Kurve 90 auch für den Nahbereich 16 eine sehr gute Nachweisempfindlichkeit zeigt. Im fraglichen Bereich weist die Kurve 90 Maxima 91, 92, 93 auf, die mit den Reflektorelementen 61, 62, 63 korrespondieren.

Mit der vorliegenden Erfindung wird ein neuer optischer Sensor bereitgestellt, mit welchem eine hohe Nachweisempfindlichkeit auch im Nahbereich und außerdem eine Empfangsoptik mit großer Apertur erzielt wird. Mit Hilfe von vorzugsweise im Bereich des Senders angeordneten Reflektorelementen oder Nahbereichselementen wird ein Hohlspiegelsegment so abgeändert, dass ein Signalabfall im Nahbereich deutlich verringert wird. Der erfindungsgemäße optische Sensor zeichnet sich durch einen preiswerten und kompakten Aufbau aus. Der Sender und der Empfänger können dabei räumlich getrennt werden und es kann eine optische Nachweisempfindlichkeit vergleichbar wie oder sogar besser als bei einem Koaxialsystem erzielt werden.

Die Erfindung kann vorteilhaft im Bereich der Optosensorik und insbesondere im Bereich der Entfernungsmessung eingesetzt werden.

## Patentansprüche

1. Optischer Sensor zum Nachweis von Objekten in einem Erfassungsbereich (12) mit einer Sendeeinheit (20) zum Aussenden von Licht in den Erfassungsbereich (12),
mit einer Empfangseinheit (30) zum Nachweis von von einem nachzuweisenden Objekt (10) reflektiertem und/oder gestreutem, Licht (70, 73, 74),
mit einer Empfangsoptik zum Leiten von von dem nachzuweisenden Objekt (10) reflektiertem und/oder gestreutem Licht (70, 73, 74) auf die Empfangseinheit (30), wobei die Empfangsoptik optische Mittel aufweist zum Leiten von Licht sowohl von Objekten (10) in einem Fernbereich (14) als auch von Objekten (10) in einem Nahbereich (16) vor der Empfangsoptik, und
mit einer Steuer- und Auswerteeinheit (50) zum Ansteuern der Sendeeinheit (20) und der Empfangseinheit (30), zum Auswerten eines von der Empfangseinheit (30) nachgewiesenen Signals und zum Ausgeben eines Schaltsignals, wobei die Empfangsoptik zum Leiten von Licht von Objekten (10) im Fernbereich (14) einen Hohlspiegel (40) aufweist und
wobei die Empfangseinheit (30) mindestens einen Detektor (32) aufweist, der in einem Fokalbereich des Hohlspiegels (40) positioniert ist,
**dadurch gekennzeichnet,**
**dass** mindestens ein gesondertes Reflektorelement (61, 62, 63) vorhanden ist, welches zum Leiten des Lichts von Objekten (10) im Nahbereich (16) auf mindestens einen der Detektoren (32) entweder in direkter Weise oder durch Reflexion über gegebenenfalls vorhandene weitere gesonderte Reflektorelemente eingerichtet und positioniert ist.

2. Optischer Sensor nach Anspruch 1,
**dadurch gekennzeichnet,**
**dass** mindestens eines der gesonderten Reflektorelemente (61, 62, 63) an einer Innenseite des Hohlspiegels (40) angeordnet ist.

3. Optischer Sensor nach Anspruch 1 oder 2,
**dadurch gekennzeichnet,**
**dass** die gesonderten Reflektorelemente (61, 62, 63) separate im Hohlspiegel (40) angeordnete Komponenten sind.

4. Optischer Sensor nach einem der Ansprüche 1 bis 3,
**dadurch gekennzeichnet,**
**dass** mindestens eines der Reflektorelemente (61, 62, 63) als Konturkörper ausgebildet ist.

5. Optischer Sensor nach einem der Ansprüche 1 bis 4,
**dadurch gekennzeichnet,**
**dass** als gesonderten Reflektorelement (61, 62, 63) mindestens ein ringsegmentförmiges Element vorhanden ist.

6. Optischer Sensor nach Anspruch 1 bis 5,
**dadurch gekennzeichnet,**
**dass** der Hohlspiegel (40) mit mindestens einem der gesonderten Reflektorelemente (61, 62, 63) einstückig gefertigt ist.

7. Optischer Sensor nach einem der Ansprüche 1 bis 6,
**dadurch gekennzeichnet,**
**dass** die Sendeeinheit (20) in einem achsfernen Bereich des Hohlspiegels (40) angeordnet ist.

8. Optischer Sensor nach einem der Ansprüche 1 bis 7,
**dadurch gekennzeichnet,**
**dass** die gesonderten Reflektorelemente (61, 62, 63) in einer Umgebung der Sendeeinheit (20) positioniert sind.

9. Optischer Sensor nach einem der Ansprüche 1 bis 8,
**dadurch gekennzeichnet,**
**dass** der Hohlspiegel (40) wenigstens bereichsweise die Form eines Paraboloids aufweist.

10. Optischer Sensor nach einem der Ansprüche 1 bis 9,
der als Lichttaster ausgebildet ist.

11. Optischer Sensor nach einem der Ansprüche 1 bis 9,
der als optischer Entfernungsmesser nach dem Laufzeitprinzip ausgebildet ist.

## Claims

1. An optical sensor for the detection of objects in a monitored region (12) comprising a light-emitting unit (20) for the emission of light into said monitored region (12),
comprising a receiver unit (30) for detecting light (70, 73, 74) reflected and/or scattered by an object to be detected (10),
comprising reception optics for guiding said light (70, 73, 74) reflected and/or scattered by said object to be detected (10) toward said receiver unit (30), which reception optics comprise optical means for guiding light from objects (10) in a remote region (14) as well as from objects (10) in a close-up region (16) in front of said reception optics,
and comprising a control and evaluation unit (50) adapted to control said light-emitting unit (20) and said receiver unit (30), adapted to evaluate a signal detected by said receiver unit (30), and adapted to emit a switching signal, which reception optics comprise a concave mirror (40) for guiding light from objects (10) in said remote region (14),
and said receiver unit (30) comprises at least one detector (32) positioned in a focal region of said concave mirror (40),
**characterized in that**
at least one separate reflector element (61, 62, 63) is present which is adapted and positioned to guide the light from objects (10) in said close-up region (16) to at least one of said detectors (32) either directly or by reflection via any other separate reflector elements that may be present.

2. The optical sensor as defined in claim 1,
**characterized in that**
at least one of the separate reflector elements (61, 62, 63) is disposed on an inside surface of the concave mirror (40).

3. The optical sensor as defined in claim 1 or claim 2,
**characterized in that**,
the separate reflector elements (61, 62, 63) are discrete components disposed in the concave mirror (40).

4. The optical sensor as defined in any one of claims 1 to 3,
**characterized in that**,
at least one of said reflector elements (61, 62, 63) is in the form of a contour body.

5. The optical sensor as defined in any one of claims 1 to 4,
**characterized in that**
at least one of said separate reflector elements (61, 62, 63) is in the form of an annular segment-shaped element.

6. The optical sensor as defined in claim from 1 to 5,
**characterized in that**
said concave mirror (40) is integral with at least one of said separate reflector elements (61, 62, 63).

7. The optical sensor as defined in any one of claims 1 to 6,
**characterized in that**,
said light-emitting unit (20) is disposed in an axially remote region of said concave mirror (40).

8. The optical sensor as defined in any one of claims 1 to 7,
**characterized in that**,
said separate reflector elements (61, 62, 63) are positioned in the vicinity of said light-emitting unit (20).

9. The optical sensor as defined in any one of claims 1 to 8,
**characterized in that**
said concave mirror (40) has in at least certain regions thereof the form of a paraboloid.

10. The optical sensor as defined in any one of claims 1 to 9,
which is in the form of a diffuse mode sensor.

11. The optical sensor as defined in any one of claims 1 to 9,
which is in the form of an optical distance finder operating according to the delay-time principle.

## Revendications

1. Capteur optique pour détecter des objets dans une zone de détection (12) avec une unité émettrice (20) pour envoyer de la lumière dans la zone de détection (12),
avec une unité réceptrice (30) pour détecter la lumière (70, 73, 74) réfléchie et/ou diffusée par un objet (10) à détecter,
avec une optique réceptrice pour diriger la lumière (70, 73, 74) réfléchie et/ou diffusée par l'objet (10) à détecter vers l'unité réceptrice (30), dans lequel l'optique réceptrice présente des moyens optiques pour diriger de la lumière tant depuis des objets (10) situés dans une zone lointaine (14) que depuis des objets (10) situés dans une zone proche (16) devant l'optique réceptrice, et
avec une unité (50) de commande et d'analyse pour commander l'unité émettrice (20) et l'unité réceptrice (30), pour analyser un signal détecté par l'unité réceptrice (30) et pour délivrer un signal de commutation, dans lequel l'optique réceptrice comprend un miroir concave (40) pour diriger de la lumière depuis des objets (10) situés dans la zone lointaine (14), et
dans lequel l'unité réceptrice (30) présente au moins un détecteur (32) qui est positionné dans une zone focale du miroir concave (40),
***caractérisé***
***en ce qu*'**au moins un élément réflecteur (61, 62, 63) séparé est présent, qui est agencé et positionné pour diriger la lumière depuis des objets (10) situés dans la zone proche (16) vers au moins l'un des détecteurs (32) soit de manière directe, soit par réflexion par l'intermédiaire d'autres éléments réflecteurs séparés éventuellement présents.

2. Capteur optique selon la revendication 1,
***caractérisé***
***en ce qu*'**au moins l'un des éléments réflecteurs séparés (61, 62, 63) est placé sur une face intérieure du miroir concave (40).

3. Capteur optique selon la revendication 1 ou 2,
***caractérisé***
***en ce que*** les éléments réflecteurs séparés (61, 62, 63) sont des composants séparés placés dans le miroir concave (40).

4. Capteur optique selon l'une quelconque des revendications 1 à 3, ***caractérisé***
***en ce qu*'**au moins l'un des éléments réflecteurs (61, 62, 63) est conformé en corps à contours.

5. Capteur optique selon l'une quelconque des revendications 1 à 4, ***caractérisé***
***en ce qu*'**au moins un élément en forme de segment annulaire est prévu comme élément réflecteur séparé (61, 62, 63).

6. Capteur optique selon l'une quelconque des revendications 1 à 5, ***caractérisé***
***en ce que*** le miroir concave (40) est fabriqué d'un seul tenant avec au moins l'un des éléments réflecteurs séparés (61, 62, 63).

7. Capteur optique selon l'une quelconque des revendications 1 à 6, ***caractérisé***
***en ce que*** l'unité émettrice (20) est placée dans une zone du miroir concave (40) distante de l'axe.

8. Capteur optique selon l'une quelconque des revendications 1 à 7, ***caractérisé***
***en ce que*** les éléments réflecteurs séparés (61, 62, 63) sont positionnés dans un environnement de l'unité émettrice (20).

9. Capteur optique selon l'une quelconque des revendications 1 à 8, ***caractérisé***
***en ce que*** le miroir concave (40) présente au moins par zones la forme d'un paraboloïde.

10. Capteur optique selon l'une quelconque des revendications 1 à 9,
qui est conformé en cellule photoélectrique.

11. Capteur optique selon l'une quelconque des revendications 1 à 9,
qui est conformé en mesureur optique d'éloignement selon le principe du temps de parcours.
